# EUROPEAN PATENT APPLICATION

(11) **EP 1 382 590 A2**
(43) Date of publication of application: **21.01.2004**
(21) Application number: 03405514.5
(22) Date of filing: 09.07.2003
(51) Int. Cl.: C04B 41/87, C04B 38/06

(54) **Open cell foam ceramic material**

(30) Priority: 19.07.2002 CH 12662002
(71) Applicant: Erbicol SA, 6828 Balerna (CH)
(72) Inventor: Ortona, Alberto, 6900 Lugano (CH); Molinari, Manlio, 240240 Madone (BG) (IT); Romelli, Luca, 6926 Montagnola (CH)
(74) Representative: Gaggini, Carlo, Dipl.Ing.

(57) **Abstract**

The present invention concerns an open cell foam ceramic material of high mechanical resistance for porous burners, in which the outer and inner walls of the bridges of hollow triangular cross-section, which form the structure of the foam material, are covered with a thin film of silicon carbide. The film entirely fills the fissures between the internal convex walls of the cavities of the bridges, and corresponding to them forms a rounded-off connecting zone between two neighbouring walls. These rounded-off connecting zones prevent formation of deep fissures (cracks or notches) in the bridges and decisively reinforce the foam ceramic material produced according to the inventive method.

The method of producing comprises three new phases of processing, in comparison to the state of the art, which are:
- Covering of the bridges with a polymer of low viscosity and polymerising it at low temperature;
- Pyrolysis for transforming the coating polymer into a thin porous carbon film;
- A thermal treatment at high temperature for infiltrating the foam ceramic material with metallic silica and transforming the porous carbon film into a silicon carbide film.

## Description

The present invention relates to the field of ceramic materials and concerns an open cell foam ceramic material of high resistance, as used for filters of greater thickness, support body for filtration, heat exchangers, regenerators, electrically heated thermostats, support for catalytic materials, burner elements for radiating surface burners and volumetric burners, high temperature reaction chambers, sound absorbing or reinforcing materials for high temperature panels, as well as a method of producing the material.

### State of the Art

Procedures are known for producing open cell foam ceramic materials according to the so-called "Schwartzenwalder procedure", which is applied industrially and is used quite frequently. According to this procedure part of an open cell polymer is cut, which then is impregnated with a suspension of ceramic particles and water or solvent. Thereafter the impregnated polymer foam is mechanically compressed once or several times, and then is dried. Then the polymer foam is burned off, and thereupon the remaining ceramic layer is sintered (US-309094). The open cell ceramic foam produced according to this procedure is a copy (stamp) of the polymer structure of the material used (as a mould) initially. Combustion of the polymer foam produces the hollow ceramic bridges. The cross-section of these bridges presents a triangular cavity. Due to the thermal treatments the corners of the cavities in the ceramic coat layer often are fissured. The cavities and the fissures (cracks) cause very low mechanical resistance. During the sintering process fissure formation increases further. In order to avoid this, products are applied, which are characterised by a relatively limited contracting action, yielding the result that after sintering the product is characterised by a greater internal porosity, and consequently by a low mechanical resistance (J,A. Ceram. Soc. 77(6), 1467-72 (1994)).

For increasing the resistance it was tried also to ensure that the ceramic bridges of the foam are covered by one or more coat layers before or after the sintering process. These successive layers are applied with a suspension of ceramic material (e.g. GB-2097777).

The difficulty is seen in that excess suspension cannot be pressed out of the cells of the foam ceramic material mechanically without destruction of the hardened foam. Very liquid solutions with low solid contents must be applied which during the dripping off do not block the cells, which would reduce the open porosities.

The very liquid suspensions with low solids contents present the disadvantage that the coat layer on the ceramic bridges is thin merely and that this layer, while the suspension is drying, is disrupted by drying cracks and, respectively, during the sintering process, by cracks due to shrinking.

Furthermore the efficiency of a multi-layer coat on the bridges of the cells is reduced already, as the unsuitable structure of the cavities in the bridges is not eliminated. A successive layer coat also reduces the volume of the free cells of the foam ceramic material, which for most applications proves disadvantageous (J,A. Ceram. Soc. 77(6), 1467-72 (1994) p. 1467, paragraph 2, left).

From the EP-0369098 a procedure is known in which a pre-sintered open cell foam ceramic material is impregnated under vacuum with a suspension of colloidal incombustible oxide and an incombustible oxide powder, is dried after dripping off of excess suspension, and then is sintered. In addition to formation of coat layers on the bridges of the cells (as described above) during the impregnation process, also filling of the cavities in the bridges with the suspension is aimed at. Also in this case application of a very liquid suspension implies that the percentage of ceramic cells it can reach during the impregnation process in the cavities of the bridges is very low. Thus the volumetric percentage of the ceramic phase after the sintering process is extremely reduced.

Also in this case the coat layers of the ceramic suspension of low concentration often crack during the drying and the sintering processes.

But also the manufacture of an open cell foam ceramic material using CVD/CVI is known. According to such technique the carbon foam is obtained by means of pyrolysis of an open cell polymer foam and then is cut (formed) according to the geometry of the desired part. Thereafter coating the carbon foam is effected with ceramic components using CVD/CVI (Ceram. Bull. Vol. 70, n. 6, 1991, 1025 and 1028).

A production process of this nature is very cost intensive and requires very sophisticated plant equipment.

Also the foam ceramic material produced according to this procedure represents a print copy of the polymer cellular structure of the starting material used as a mould. The ceramic bridges are formed by a compact layer of the ceramic material applied, the inside of the bridges, however, consist of the original carbon structure.

Owing to the compactness and to the resistance of the ceramic coat layer of the foam ceramic material as a whole is very resistant, but due to the inner structure of carbon, the mechanical resistance of which is much lower than the one of the ceramic layer, the mechanical resistance against high loads is impaired. Furthermore the structure of carbon is subject, at high temperatures, to oxidation processes entailing a low stability of the foam ceramic material at high temperatures. For high temperature applications the carbon structure is eliminated previously, which causes hollow ceramic bridges to appear again.

Another procedure known for producing an open cell foam ceramic material is the direct foaming procedure using a propellant agent. For this purpose first a suspension is prepared of ceramic particles and water or a solvent. To this suspension a propellant and polymer components are added. This suspension is cast into a mould and the reaction of the propellant sets in. Caused by this reaction gas bubbles develop, which are foaming the suspension. The polymer components then are eliminated by combustion and the resulting foam material is sintered (Produktblatt Schäumungsmittel (product sheet foaming agents) W 53 FL, Zschimmer & Schwarz GmbH & Co, Lahnstein). The disadvantage of this procedure is seen in that control of the foaming process is difficult.

A foam ceramic material produced according to this procedure presents a net-type structure. The ceramic bridges consist, after sintering, of ceramic material across their entire cross-section.

The outer geometric shape of a foam ceramic material of such type is limited in at least one dimension, as the mould in which the foaming process takes place is open. The sintered foam ceramic material is very porous microscopically, as the suspension does not permit a high concentration of particles. If higher proportions of powder are used, the resulting suspension is too viscous, and foaming cannot take place, or can occur partially only. Low powder concentrations yield a high porosity of the resulting ceramic material. During the thickening of the ceramic matter, as the material being sintered shrinks, much tension and fissures develop, which further limit the resistance of the ceramic material. If a low shrinkage ceramic material is chosen for the sintering process, the resulting foam ceramic material presents porosities, which cause a low resistance. A further disadvantage is seen in that control and modification of the width of the pores generally, and in particular across the thickness, is difficult, which detrimentally influences the permeability of the foam ceramic material.

Also known is a procedure of producing of foam ceramic material using direct foaming with air. In this procedure a polymer component is added to a suspension of ceramic particles and water or a solvent. Into the suspension then air bubbles are introduced using a fast mixer. The foamed suspension is cast into a mould and is polymerised. The polymer component subsequently is burned off and the foam material is sintered.

Using this procedure thin foams only can be produced, which present reduced open porosity. The bridges of ceramic material are filled across the whole cross-section. But the resistance of this foam material is limited, however, as it is not possible to achieve high concentrations of ceramic particles, and also as due to the shrinkage during the sintering process tensions and fissures form, which reduce the resistance of the foam ceramic material. Permeability of this foam material is limited further due to the formation of closed cells.

According to another procedure, described in the EP-0907621, production of high resistance open cell foam ceramic material is proposed, in which the internal cavities of the ceramic bridges are entirely, or essentially, filled with one or more metallic phases and/or ceramics and/or glass phases, after reaction with oxygen.

The procedure for producing these open cell ceramic foam materials of high resistance consists in that open cell polymer foam material is cut to size, provided with a coat layer of a suspension of ceramic particles and water or a solvent, is pressed and dried, and then the polymer foam is eliminated by combustion or by pyrolysis, and subsequently the coated foam is sintered, and during or after the sintering process the cavities of the ceramic bridges, the fissures of the ceramic bridges, and the porosities of the ceramic bridges of the sintered ceramic foam with a flow, or a suspension, the flow or the suspension being composed of materials melting at temperatures below the fusion temperature of the ceramic foam material and presenting a dilatation coefficient similar to the one of the ceramic foam, and having a high degree of covering power and not reacting, or just partially reacting, with components of the ceramic foam. In the case of filling the bridges with a suspension, the ceramic foam filled with the suspension then is heated to a temperature above the fusion temperatures of the materials contained in the suspension, in the mixture of materials or in their reaction products.

The ceramic foam material obtained according to this working procedure does not permit, however, realisation of the high mechanical resistance values desired. In fact, the following disadvantages still prevail:
- The triangular cross-section of the bridges still presents acute angles with corners, the curvature angle of the inner wall being essentially equal to zero. Edges of this type necessarily form, due to e.g. the temperature excursion to which they are subject in operation, and to the corresponding dilatation and shrinkage, the fissures or fatigue cracks, which over time propagate ever deeper into the material and finally cause local rupture resulting in a considerable reduction of the mechanical resistance of the foam ceramic material.
- It is true, that the internal cavities of the ceramic bridges as well as the fissures of the bridges and their porosities are filled entirely, or essentially entirely, with one or more metallic phases or similar filling material, but a filling of this type, however, helps little for preventing the formation of fatigue cracks
- if the filler material is just not adhering totally to the ceramic bridge at the location of a deeper point of the cavity, i.e. at the point where formation of fatigue cracks begins - and entails excessive presence in the cavity of a phase, metallic and/or glass-type, and/or ceramic, which phases in the presence of oxygen at a temperature of about 1500°C finally transform into products damaging the foam ceramic material itself and weaken it.
- Finally it is to be noted that the foam materials produced according to this method due to their characteristic filling in the cavities of the bridges, the fissures, and the pores, always present a higher heat capacity due to their relatively high mass, which is undesirable in most applications of open cell foam ceramic materials, for which applications materials are preferred which heat and cool as fast as possible.

The present invention aims at eliminating the disadvantages of the open cell foam ceramic materials produced according the various procedures described above, and in particular to create an open cell foam ceramic material presenting high mechanical resistance, and, considering the effect of thermal excursion, a reduced mass in order to obtain as low a thermal capacity as possible, good permeability for the through-passage of gas, and can be produced using a production process that is easily controlled, and can be exactly reproduced.

These objectives are met with an open cell foam ceramic material presenting the characteristics according to the claim 1, and the inventive method of producing a foam material of this type presents the characteristics described in the claim 3 of the present invention.

The present invention is described in the following with reference to two practical examples of producing inventive foam materials of this type.

Before said particular examples are described it is worthwhile to look into the formation process of the open cell foam ceramic materials, as just in the first phase of processing, i.e. the commercially available polymer foam material obtained by foaming a polymer, the problems relating to the mechanical resistance of the open cell foam ceramic material originate, which the present invention intends to tackle and to resolve.

For producing an open cell foam ceramic material first a polymer foam (plastic) is chosen, which after foaming presents bubbles or closed cells. A polymer foam of this type is rigid in the sense that the closed cells give the foam material a high degree of geometric stability. Similar closed cell foam materials thus are used for e.g. producing packing materials in which rigidity is essential.

For obtaining an open cell polymer foam now the thin membranes dividing two adjacent cells are to be eliminated: this normally is effected by means of an explosion (i.e. a sudden increase in pressure) which disrupts the walls of the cells. Obviously what remains of the closed cells, can be nothing else than connections of triangular cross-section with concave sides ending in extremely pointed corners in which the curvature radius practically equals zero, i.e. pointed as a knife edge. This body structure of the polymer foam now forms the original mould on which, under application of the various procedures described, the open cell foam ceramic material is generated (as the original cells of the polymer foam had been opened owing to the rupture of the connecting membranes).

The problems of the foam ceramic materials the present invention deals with, and the present state of the art, stem from the formation of the connections with acute points of the original polymer foam, as the structure of the open cell foam ceramic material serves as the basic mould for generating the ceramic layer coated onto it. Inevitably this structure with acute points tends to reproduce as a negative in the open cell foam ceramic material, where formation of the cavities is caused in the bridges, which form the structure of the foam ceramic material, of triangular cross-section with convex walls ending in acute corners with a curvature radius near zero and thus easily (and almost inevitably) provoking the formation of fissures, which split the material.

This being said, one now could assume that the teaching of the present invention does not consist (as indicated in the known state of the art) in how to fill the triangular cavities of the bridges of the open cell foam ceramic material more or less, but to round off the convergent zones of two neighbouring walls of the triangular cavity forming a pointed convergent corner, according to what is known of the universally applied technique in the theory of the resistance of materials. It is known that any acute crack or corner, even at angles of only 90°, causes formation of fissures (also called cracks or clefts) tending to enlarge after being repeatedly loaded and to finally cause sudden rupture of the element in question. The consequences in many cases are dramatic. In the specific case of the foam ceramic material of high resistance such fissures first cause the rupture due to the crumbling of part of the ceramic body and finally the end of usability of the body. As indicated by the theory of the resistance of materials, rounding the acute edges of the grooves or notches (whether they present angles between the walls of 90° or of 0° for practically converging walls) helps to eliminate the formation of fissures practically totally and thus to decisively increase the mechanical resistance of the product realised. For all such general considerations concerning the resistance of materials, well known to the specialist in the field, reference is to be made to the specific manuals on calculating the resistance and in particular on the influence of notches.

As far as the process of manufacturing of the inventive foam ceramic material is concerned, it can be stated that this process, according to what is known and described in the state of the art, comprises a greater number of processing phases or steps, which does however, not necessarily imply that the process is rendered more complex as it is not the number of steps that counts but rather their reproducibility, or the precision respectively, with which the individual phases can be controlled and reproduced.

In the known processes, described above and determining the state of the art of producing foam ceramic materials pertinent to the present invention, in particular the one described in the EP-0907621, essentially three processing phases can be distinguished, namely:
1. Preparation of an open cell polymer foam forming the mould for the foam ceramic material to be generated, its impregnation with a suspension of ceramic particles in water or in a solvent, elimination of the excess suspension, and drying thereof;
2. Combustion of the polymer foam;
3. Sintering of the foam and, parallel to this, infiltration thereof using a flow or a suspension with metallic, ceramic, or vitreous phases.

The inventive procedure in the first two phases 1) and 2) is identical to the known one cited above.

After the phase 2) three new phases follow, namely:
I) coating of the bridges - on their inside and on their outside - of the foam ceramic material with a polymer (which can be e.g. phenol resin and isopropyl alcohol or, according to another example, with a pre-ceramic and hexamerous polymer) of low viscosity (preferably below 10 cP (Centipoise)) and polymerisation at low temperature. This coat film penetrates into, and thickens in, the deep edged fissures remaining from the polymer foam mould. The effect is that the cornered cavities, which owing to capillarity take up a greater quantity of the polymer, are filled and thus rounded off. Polymer infiltration of the micro-pores on the surface furthermore ensures the anchoring of the film on the inner and outer walls thereof.
II) Pyrolysis, in an inert atmosphere, of the foam ceramic material coated as described, in order to transform the coating polymer into a thin micro porous carbon film covering and partially impregnating the bridges of the foam material.
lll)Thermal treatment of the foam ceramic material at high temperature in order to infiltrate it with metallic silica, reacting with the carbon of the thin film formed in the phase II, forms a layer of silicon carbide.

This treatment consists in bringing the foam ceramic material into contact with flakes of metallic silica and heating the whole under vacuum to a temperature of 1600°C. At this temperature the metallic silica infiltrates the porosities of the bridges and reacts with the great quantity of carbon present forming silicon carbide. In this manner the carbon coat layer is transformed into a silicon carbide cover.

Owing to the formation of the thin layer of silicon carbide the connection zone between two neighbouring convex walls of the cavity of the bridges is rounded off, which lends the inventive foam ceramic material the characteristics of high mechanical resistance and of high oxidation resistance of the material, characteristics which render the material most suitable for producing porous burners

In the following two examples of production are described of open cell foam ceramic material according to the present invention.

### Example 1

Circular or rectangular foam elements for porous gas burners consist entirely, or in their greater portion, of SiC powder alloyed to SiC material generated in the reaction of C and Si.
1. According to the requirements, a commercially available polymer foam, obtained by foaming a polymer, subsequently is polymerised, and the closed cells are opened.
2. This foam then is coated four times with layers of a blend of silicon carbon powder (α crystalline, d₅₀ 5 µm), plastic binding agents and three solvents of different vapour pressure for controlling the evaporation. The blend is of a viscosity of about 70 cP in order to avoid closure of the cells.
3. The foam material is centrifuged in order to eliminate excess coating blend and is dried slowly under controlled ambient conditions.
4. The foam thus produced undergoes a thermal treatment of pyrolysis in an inert gas atmosphere in which the material is brought to a temperature of 500°C the temperature being increased at a rate of 10°C/hour. The whole process takes about 40 hours. Application of special plastic binders and of a very slow pyrolysis process prevent formation of cracks inside the bridges during the pyrolysis phase.
5. The foam material taken from the kiln is submerged, under vacuum, in an extremely diluted solution of phenolic resin and isopropyl alcohol with a viscosity below 10 cP. This operation is aimed at coating the internal and external walls of the bridges with a thin phenolic resin film.
6. The foam material thus coated is pyrolysed in an inert atmosphere at up to 1000°C with a temperature increase of 30°C/h and with an intermission of 1 h at 120°C before the maximum temperature is reached.
7. The phenolic resin is transformed into a thin micro porous film of carbon, which covers and in part impregnates the bridges of the foam material.
8. The foam material then is brought into contact with flakes of metallic silica in a kiln under vacuum. The kiln is heated rapidly up to a temperature of 1600°C, which temperature is maintained for one hour.
9. During the process a vacuum of 1x10⁻³ mB (Millibar) is maintained in the kiln.
10. At 1600°C the metallic silica infiltrates the porosities of the bridges and reacts with the great quantity of carbon present there and forms SiC (Silicon carbide). The carbon coat in the process is transformed into a SiC coat.
11. Excess silica is absorbed by porous graphite blocks placed, inside the kiln, in contact with the foam material.

### Example 2

Circular or rectangular foam elements for porous gas burners consist entirely, or in their greater portion, of SiC powder alloyed to SiC material obtained in the reaction of C and Si generated in the pyrolysis of a pre-ceramic polymer.
1. A commercially available polymer foam, obtained by foaming a polymer, is shaped according to the requirements, successively is polymerised and the closed cells are opened.
2. This foam then is coated four times with layers of a blend of silicon carbon powder (α crystalline, d₅₀ 5 µm), plastic binding agents, and four solvents of different vapour pressure for controlling the evaporation, and phenolic resin. The blend is of a viscosity of about 70 cP in order to avoid closure of the cells.
3. The foam material is centrifuged in order to eliminate excess coating blend and is dried slowly under controlled ambient conditions.
4. The foam thus produced undergoes a thermal treatment of pyrolysis in an inert gas atmosphere in which the material is brought to a temperature of 700°C the temperature being increased at a rate of 14°C/hour. The whole process takes about 50 hours. Application of special plastic binders, including the phenolic resin, and of a very slow pyrolysis process prevents formation of cracks inside the bridges during the pyrolysis phase.
5. The foam material taken from the kiln is submerged, under vacuum, in an extremely diluted solution of a pre-ceramic polymer (Polycarbonsilane or silica or halohydropolycarbonsilane and isopropyl alcohol, and a hexamer with a viscosity below 10 cP. This operation is aimed at coating the internal and external walls of the bridges with a thin pre-ceramic polymer film.
6. The foam material thus coated is pyrolysed in an inert atmosphere at up to 1000°C with a temperature increase of 30°C/h and with an intermission of 1 h at 120°C before the maximum temperature is reached.
7. The polymer is transformed into a thin micro porous film of silicon carbide, which covers, and in part impregnates, the bridges of the foam material.
8. The foam material then is brought into contact with flakes of metallic silica in a kiln under vacuum. The kiln is heated rapidly up to a temperature of 1600°C, which temperature is maintained for one hour.
9. During the whole process a vacuum of 1x10⁻³ mB (Millibar) is maintained the kiln.
10.At 1600°C the metallic silica infiltrates the porosities of the bridges and reacts with the carbon generated in the pyrolysis process of the phenolic resin introduced into the blend with the SiC powder present for forming SiC (Silicon carbide).
11. Excess silica is absorbed by porous graphite blocks placed, inside the kiln, in contact with the foam material.

This method differs from the one described before in the example 1 in that the major part of SiC is already is present. The quantity of Si to be infiltrated and the subsequent risk that non-reacted silica remains thus is reduced drastically.

## Claims

1. Open cell foam ceramic material of high mechanical resistance for porous gas burners, in which the convex walls of the cavities of essentially triangular cross-section of the bridges, which form the structure of the foam ceramic material, and in their zones of connection between two convex walls form deep fissures ending in points, with a curvature radius essentially equal to zero, are covered with a thin film,
**characterised in that**
the film is composed of silicon carbide SiC, and that
the film entirely fills the deep fissures and forms in these points a rounded-off zone connecting two neighbouring walls.

2. Foam ceramic material according to the claim 1,
**characterised in that**
the curvature radius of the rounded-off zone of the silicon carbide ranges from 0.1 mm and 1 mm.

3. Method of producing an open cell foam ceramic material of high resistance, in which the convex walls of the cavities of essentially triangular cross-section of the bridges, which form the structure of the foam ceramic material, in their connecting zones between two convex walls form deep fissures ending in points, with a curvature radius essentially equal to zero, are covered with a thin film of silicon carbide, which entirely fills the deep fissures and in such points forms a rounded-off connecting zone between two neighbouring walls,
**characterised by** the following phases of the procedure:
A) Preparation of an open cell polymer foam, which forms the mould for the foam ceramic material to be generated, its impregnation with a suspension of ceramic particles in water or a solvent, elimination of the excess suspension from it;
B) Combustion of the polymer foam using a pyrolysis treatment;
C) Covering the bridges, on their inside and their outside, of the ceramic foam material obtained with a polymer solution of low viscosity, polymerising at low temperature, in such a manner that the polymer penetrates into the deep pointed fissures, filling them entirely and in such points forming a rounded-off connecting zone between the two neighbouring convex walls;
D) Pyrolysis of the foam ceramic material under inert atmosphere, causing the coating polymer to transform into a thin film of porous carbon;
E) Thermal treatment of the foam ceramic material at high temperature for infiltrating it with metallic silica, which reacting with the carbon of the thin film formed in the preceding phase of the procedure, forms a layer of silicon carbide, which is effected by placing the foam ceramic material into a kiln, in contact with scales of metallic silica and by heating the kiln, under vacuum, up to about 1600°C.

4. Method according to the claim 1,
**characterised in that**
the polymer solution using which the bridges are covered (phase C), on their inside and on their outside, is a solution of phenolic resin with isopropyl alcohol.

5. Method according to the claim 1,
**characterised in that**
the polymer solution using which the bridges are covered (phase C), on their inside and on their outside, is a solution of a pre-ceramic polymer and a hexamerous polymer.

6. Method according to the claims 4 or 5,
**characterised in that**
the solution (phase C) is of a viscosity of less than 10 cP (Centipoise).
